# EUROPÄISCHE PATENTSCHRIFT

(11) **EP 2 321 550 B1**
(45) Veröffentlichungstag und Bekanntmachung des Hinweises auf die Patenterteilung: **12.10.2016**
(21) Anmeldenummer: 09778042.3
(22) Anmeldetag: 21.08.2009
(51) Int. Cl.: F16F 9/53

(54) **BEWEGUNG DÄMPFENDE VORRICHTUNG**
MOVEMENT DAMPING APPARATUS
DISPOSITIF AMORTISSANT LE MOUVEMENT

(30) Priorität: 22.08.2008 AT 13062008
(43) Veröffentlichungstag der Anmeldung: 18.05.2011
(73) Patentinhaber: Inventus Engineering GmbH, 6771 St. Anton/Montafon (AT)
(72) Erfinder: BATTLOGG, Stefan, A-6771 St. Anton im Montafon (AT); PÖSEL, Jürgen, A-6700 Bludenz (AT); ELSENSOHN, Gernot, A-3771 St. Anton im Montafon (AT)
(74) Vertreter: Riebling, Peter
(86) Internationale Anmeldenummer: PCT/EP2009/006091
(87) Internationale Veröffentlichungsnummer: WO 2010/020428

(56) Entgegenhaltungen:
- EP-A1- 1 249 637
- EP-A1- 1 795 428
- EP-A2- 1 880 936
- US-B1- 6 336 535

## Beschreibung

Die Erfindung betrifft eine Vorrichtung, in der eine magnetorheologische Flüssigkeit (MRF) vorzugsweise zur Dämpfung einer Bewegung durch eine Fließstrecke gedrückt wird, wobei eine Magnetfeld erzeugende Einheit vorgesehen ist, wobei das Magnetfeld im Bereich der Fließstrecke auf die magnetorhologische Flüssigkeit (MRF) einwirkt.

Vorrichtungen mit magnetorheologischen Flüssigkeiten sind an sich bekannt. Der Vorteil liegt darin, dass man über eine Variation des Magnetfeldes die Dämpfungswirkung beeinflussen kann. Energie dämpfende Vorrichtungen sind in Kraftfahrzeugen nicht nur im Fahrgestell, sondern auch an einer Reihe von anderen Bauteilen von Vorteil bzw. notwendig, beispielsweise an Lenksäule, Kopfstützen, Sicherheitsgurten, Sitzen und Sitzelementen, usw. Derartige Vorrichtungen werden ebenso in anderen Fahrzeugen, wie z.B. Fahrrädern in der Vorder- und Hinterradaufhängung, in der Sattelstütze od. dgl. eingesetzt. Ebenso werden sie in diversen Sportgeräten, wie Lauf- oder Schischuhen, usw. verwendet.

Besonders vorteilhaft sind solche Vorrichtungen, wenn damit große Druckunterschiede (On-State zu OFF-State bzw. ein- zu ausgeschaltet) und daraus resultierende hohe Maximaldrücke erzeugt werden können.

Dies kann vorteilhaft mit Trennwänden im vom Magnetfeld durchdrungenen Strömungskanal erreicht werden, die die Fließtrecke unterteilen und die Reibfläche vervielfachen, ohne den Bauraumbedarf stark zu erhöhen.

Als Stand der Technik kann dabei EP 1270989 A1 genannt werden, bei dem das Magnetfeld durch eine koaxiale Spule erzeugt wird und auf eine magnetorheologische Flüssigkeit in mehreren ringförmigen, konzentrischen Kanälen wirkt, welche durch ringförmige Trennwände gebildet werden.

Ein wesentlicher Nachteil bei Ausführungen nach dem Stand der Technik ist der Spulenkern, welcher ein "magnetisches Nadelöhr" darstellt und so der Miniaturisierung entgegensteht. Der gesamte magnetische Fluss muss durch den Kern im Zentrum der Spule, dessen vom Magnetfeld durchflutbare Querschnittsfläche quadratisch abnimmt wenn der Spulendurchmesser verkleinert wird. Bedingt durch die magnetische Sättigung sind aber nur bestimmte Flussdichten im Kern sinnvoll und möglich, je nach Material im Bereich von 1,5 bis 2Tesla.

Die radial außen liegenden Kanäle erzeugen so zum innen liegenden Kern ein schlechtes Flächenverhältnis das bei gleichbleibendem Kanalquerschnitt immer schlechter wird, je kleiner der Kerndurchmesser wird.

Ein wesentlicher Nachteil beim Stand der Technik ist die ändernde magnetische Flussdichte in den Strömungskanälen, weil die vom Magnetfeld durchflossene Fläche von Innen nach Aussen zunimmt, wodurch die magnetische Flussdichte radial nach außen stark abnimmt (bei der EP1270989A1 um zirka die Hälfte). Aus unterschiedlichen Flussdichten resultieren unterschiedliche Viskositätsänderungen und sich daraus ergebende unterschiedliche Drücke in den Strömungskanälen, was zu Verformung der Trennwände führt. Magnettechnisch vorteilhaft ist es, wenn die Wandstärken der Trennwände und die Abstände zwischen den Trennwänden klein ausgeführt werden (im Bereich von 0,2mm). Da die Fächeroberfläche groß ist (nur dann geben Fächer einen Sinn, weil die Fächer die Reibfläche vergrößern sollen) ergeben sich auch schon bei kleinen Druckunterschieden große Kräfte. Die (dünnen) Fächer können sich u.a. auch durch die Verformung berühren, was dann zum magnetischen Kurzschluss und dadurch zu noch größeren Feldstärkeunterschieden führt. Die einwandfreie Funktion der Vorrichtung ist dann nicht mehr gewährleistet.

Ein weiterer Nachteil beim Stand der Technik ist, dass die - in Fließrichtung gesehen - vom Magnetfeld durchfluteten zwei Abschnitte eines Kanals räumlich voneinander getrennt sind. MRF-Partikel die den Kanal durchströmen passieren die Bereiche im Magnetfeld und bilden dort Ketten (= Viskositätsänderung), lösen die Ketten aber wieder im neutralen Bereich zwischen den Feldern.
Die für die Kettenbildung notwendige Zeit verkürzt die effektive Kanallänge, da während der Kettenbildung der MRF-Effekt nicht voll ausgeprägt ist. Gerade bei hohen Strömungsgeschwindigkeiten muss die Zeit zur Kettenbildung berücksichtigt werden und gegebenenfalls durch längere Kanäle kompensiert werden. Längere Kanäle verschärfen aber wiederum die Problematik der magnetischen Sättigung des Kerns.

In bestimmten Anwendungen, bei denen der Durchfluss von MRF komplett gesperrt werden soll, ist die Anordnung des Durchgangskanals als mehrere ringförmige, konzentrische Kanäle von Nachteil. Um ein Durchbrechen (Fließen) der MRF zu verhindern darf das Magnetfeld an seiner schwächsten Stelle im Kanal einen gewissen Wert nicht unterschreiten.
Diese schwächste Stelle liegt radial außen, wo die Flussdichte am geringsten ist. Die für eine gewisse Feldstärke im radial äußersten Kanal notwendige Flussdichte erzeugt aber im innersten Kanal eine wesentlich höhere Flussdichte, da die durchflutete Fläche kleiner ist.

Das kann einerseits einen den Energiebedarf des Systems erhöhen, da im inneren Bereich sehr hohe Flussdichten nötig sind oder andererseits Schwachstellen erzeugen, bei denen das MRF durchbrechen kann weil die zum Sperren des Kanals notwendige Feldstärke nicht erreicht wird. Die Feldstärke kann nicht beliebig erhöht werden, damit auch der radial äußerste Kanal eine hohe Flussdichte aufweist, da der Kern zuvor magnettechnisch gesättigt ist.

Die beschriebenen Nachteile eines Systems nach dem Stand der Technik betreffen sinngemäß auch die US 2005087408 A1. Der darin beschriebene Dämpfer erzeugen mit einer koaxialen Spule ein Magnetfeld, das entweder durch die Fächer kurzgeschlossen wird und so die radial äußersten Bereiche nicht erreicht oder, wenn die Fächer magnetisch nicht leiten, durch den großen Luftspalt und die Vervielfachung der durchfluteten Fläche radial nach außen stark abnimmt.

In der WO2007/149393 A2 verläuft das Magnetfeld immer parallel zum strömenden Medium, wodurch es zu einer minimalen Kettenbildung bzw. Viskositätsänderung im MRF kommt, da sich die Ketten nur dann bilden, wenn die Magnetfeldlinien normal zur Strömungsrichtung liegen. Es ist auch kein magnetischer Rückschluss vorhanden Dadurch ist dieses Konstruktion sehr ineffizient.

Besonders bei hohen Drücken kommt es bei kleinsten Magnetfeldverteilungsunterschieden in den durch Druck beaufschlagten Fächerelementen zu starken Verformungen (Defekten). Die Funktion ist dann nicht mehr gewährleistet. Bei Konstruktionen nach dem Stand der Technik würden diese Verformungen noch größer werden, da die magnetfelderzeugende Einheit in Relation zum radial äußersten Fächerkanal ein sehr ungünstiges Verhältnis aufweist.

In der DE 198 20 570 (Carl Schenk AG) werden ringformartige Fächer gezeigt.
Es gelten die gleichen Nachteile, wie eingangs genannt, nämlich verschiedene Wirkflächengröße, ein sich änderndes Magnetfeld und ein sich verändernder Druck.
Das Mischen von nacheinander liegenden Bypasskanälen und Sperrkanälen, so wie auf Seite 3 der DE 198 20 570 beschreiben, ist bei MRF und Magnetfeldern so nicht möglich. Bei für elektrorheologischen Flüssigkeiten ausgelegten Konstruktionen geht das elektrische Feld von einer Platte zur anderen (- Pol zu + Pol) und schließt sich über ein Kabel, bei MRF Anwendungen muss das Magnetfeld von einer Magnetfelderzeugungseinheit durch viele Elemente und dann über einen magnetischen Rückschluss zur Erzeugungseinheit zurück fliesen (Magnetfeld wird geschlossen), wobei diese Teile vorteilhaft gleiche Querschnittsflächen aus magnetisch leitenden Materialien aufweisen sollen. Die baugleiche Verwendung von Vorrichtungen für ERF und MRF ist deshalb technisch nicht richtig.

Bei den EP 1 270 989 und US 2005 087 408 geht der Fächer in Strömungsrichtung gesehen über die ganze Länge. Damit ist allerdings der Nachteil verbunden, dass die zwischen den magnetisch durchflossenen Fächersegmenten liegenden Fächerwände die Grundreibung (Grunddruck) erhöhen, was die Spreizung (= Unterschied zwischen Ein- und Ausgeschaltet) reduziert. Bestromt bringt dieser Fächerabschnitt nichts, da er nicht von einem Magnetfeld durchflossen ist. Diese Konstruktion ist deshalb nachteilig.

Die EP 1 249 637 A offenbart eine gattungsgemäße eine Bewegung dämpfende Vorrichtung, in der eine magnetorheologische Flüssigkeit zur Dämpfung einer Bewegung durch eine Engstelle bildende Fließstrecke gedrückt wird, wobei eine ein Magnetfeld erzeugende Einheit vorgesehen ist, deren Magnetfeld im Bereich der Fließstrecke über Polflächen auf die magnetorheologische Flüssigkeit einwirkt, wobei die Fließstrecke durch zumindest eine zusätzliche Reibungsfläche bildende im Wesentlichen ebene Trennwand in zumindest zwei im Wesentlichen eben ausgebildete Strömungsbahnen unterteilt ist.
Wesentlicher Nachteil der EP 1 249 637 A Ausführungsform ist, dass hier oszillierende Bewegung der Flüssigkeit durch ein oszillierendes Magnetfeld erzeugt wird. Dafür werden zusätzlich zum Magnetfeld des Elektromagneten, elektrische Leiter in das Medium eingebracht, welche bei Beströmung ein zusätzliches zweites Magnetfeld erzeugen und das Magnetfeld der Elektromagneten überlagert. Es sind also immer zumindest zwei separate Felderzeugungseinrichtungen vorhanden und demnach auch entsprechend viele Spulen, Anschlüsse und Ansteuerungen notwendig. Dies macht die Ausführungsform sehr groß und aufwändig.

Ein gattungsgemäßes Ventil ist aus der US 6,336,535 B bekannt.

Bei einer erfindungsgemäßen Vorrichtung können diese Nachteile verhindert werden, was eine Miniaturisierung des Systems ermöglicht und den Bau von effizienteren Dämpfungsvorrichtungen zulässt.
In einer bevorzugten Ausführung wird dies dadurch erreicht, dass
- die Polflächen im Wesentlichen eben ausgebildet sind und
- parallel zur Durchflussrichtung der MRF liegen und
- der schaltbare MRF Kanal in Strömungsrichtung gesehen ohne Unterbruch von Magnetfeld beaufschlagt wird und
- dabei die zwischen den Polflächen liegende Fließstrecke durch mindestens eine im Wesentlichen ebene Trennwand aus vorzugsweise ferromagnetischem Material in mindestens zwei Strömungskanäle unterteilt wird.

Die Trennwände haben annähernd die gleiche Breite, sodass sich ein homogenes Magnetfeld ergibt. Hierbei wird jedoch voraus gesetzt, dass die Feldlinien des Magnetfeldes im Wesentlichen senkrecht durch die Trennwände verlaufen.

Ein wesentliches Merkmal der Erfindung liegt darin, dass die Feldstärke in den einzelnen Kanälen sehr gleichförmig ist. Die Fächerelemente haben annähernd die gleiche Breite und Länge, so dass die durchflutete Fläche und somit die Feldstärke relativ homogen bleibt.

Das Magnetfeld im Kanal wird so entgegen dem Stand der Technik nicht mehr unterbrochen wenn eine Spule verwendet wird, deren Achse normal zur Durchflussrichtung verläuft. Zudem ist das Verhältnis der durchfluteten Kern- zur durchfluteten Kanalfläche sehr günstig, da diese Flächen annähernd gleich sein können. Die einzelnen Kanäle sind im Wesentlichen gleich durchflutet. Daher liegt ein wesentliches Merkmal der Erfindung darin, dass die Magnetfeldstärke bzw. die Flussdichte von der Magnetfelderzeugungseinheit ausgehend (Spule, Kern) über die Fächer, die Kanäle und die Umhüllung, über welche das Magnetfeld zur Erzeugungseinheit zurück fliest, fast gleich (homogen) ist. In den einzelnen vom Magnetfeld beinfußten Kanälen und den Kanälen zueinander gesehen findet dadurch die gleiche Viskositätsänderung der magnetorheologischen Flüssigkeit statt, es herrscht so im Wesentlichen der gleiche Druck.

Gemäß dem Hagen-Poiseuille'schen Gesetz ist der Volumenstrom, d. h. das geflossene Volumen pro Zeiteinheit bei einer laminaren Strömung einer homogenen viskosen Flüssigkeit durch ein Rohr von der vierten Potenz des Radius des Rohres abhängig. Die extreme Abhängigkeit des Strömungswiderstandes von der lichten Weite des Rohres ist auch bei nicht zylindrischen Kanälen gegeben und gilt auch mit Einschränkungen für Nicht-Newton'schen Flüssigkeiten.

Da meist konstruktive Beschränkungen für eine beliebige Dimensionierung von Fließstrecken mit umhüllenden Reibungsflächen vorliegen, ergibt sich oft das Problem, hohe Strömungswiderstände zu erzielen, so dass eine Bewegungsdämpfung nicht im gewünschten Ausmaß erfolgen kann.

Durch die Erfindung wird nun zur Lösung dieser Schwierigkeiten vorgeschlagen, dass die Fließstrecke durch zumindest eine zusätzliche Reibungsfläche bildende Trennwand in zumindest zwei Strömungsbahnen unterteilt ist. Die Fließstrecke weist eine Umhüllung auf, d.h. sie ist innerhalb eines Rohres, Kanals od. dgl. ausgebildet. Bevorzugt stellt sie einen Austrittskanal eines die Flüssigkeit enthaltenden Behälters dar. Auf diese Weise werden durch die Trennwand zwar nur zwei zusätzliche Reibungsflächen geschaffen, deren Einfluss auf den Strömungswiderstand ist aber weit größer als eine bloße Verdoppelung, da die lichte Weite der die Fließstrecke begrenzenden Umhüllung etwa halbiert wird. Die zusätzlichen Reibungsflächen sind insbesondere eben.

In einer bevorzugten Ausführung ist vorgesehen, dass mehrere Trennwände parallel zueinander in mindestens einem Paket zusammengefasst sind, wodurch der vorstehend beschriebene Effekt noch wesentlich verstärkt wird.

Damit lässt sich die Dämpfung in einem weiten Bereich über das Magnetfeld einstellen, bei maximalem Magnetfeld ist sogar eine Sperrung des Durchtritts der magnetorheologischen Flüssigkeit bis zu 60 bar, vorzugsweise bis zu 400 bar Druck möglich und auch ausgeführt worden. MRF Ventile nach dem Stand der Technik arbeiten meist nur mit Maximaldrücken um 30bar.

Die zuvor beschriebenen Konstruktionsmerkmale sind aus dem zuvor zitierten Stand der Technik nicht bekannt, und daher auch nicht nahegelegt. Die für die einwandfreie und vorteilhafte Funktion der Vorrichtung unumgängliche Optimierung einer derartigen Vorrichtung erfordert in kürzester Zeit eine Änderung der Fließfähigkeit durch Aufbau und Veränderung des Magnetfeldes. Feldlinienverlauf, Querschnittsform, Materialwahl, Druckverhalten, Verformungen, Bauraumbedarf etc. stellen nicht eine Auswahl aus selbstverständlichen gleichwertigen Möglichkeiten dar, sondern sind das Ergebnis intensiver Untersuchungen und Experimente. Es kommt nicht von ungefähr, dass Details dazu im Stand der Technik nicht angeführt sind.

Außerdem zeichnet sich die Erfindung durch eine kompakte Bauweise aus, welche vor allem bei beengten Platzverhältnissen und/oder dem Erfordernis eines geringen Gewichts (wie beispielsweise im Fahrradbau) von Vorteil ist.

In einer ersten Ausführung kann das Paket aus sich parallel zu den Strömungsbahnen erstreckenden Trennwänden aufgebaut sein, die durch hoch stehende Laschen, insbesondere hochgebogene Randlaschen auf Abstand gehalten sind. Über eine beliebige Verbindung an den Laschen, direkte Verklebung, Verlötung, Klebestreifen oder dergleichen, kann das Paket zusammen gehalten werden. Beispielsweise können 16 Trennwände á 0,2 mm Dicke vorgesehen sein, die den Austrittskanal in 17 Strömungsbahnen á 0,2 mm unterteilen. Der Austrittskanal hat somit im Bereich der Reibungsflächen eine lichte Höhe von 6,6 mm. Anstatt das Paket aus Einzelelementen zusammen zu fügen, ist es auch denkbar, das Trennwandpaket, beispielsweise aus Kunststoff oder Metall im Spritzgießverfahren oder dergleichen einstückig herzustellen.

In einer weiteren Ausführung kann sich zumindest eine Trennwand in einer Querschnittsebene des Austrittskanals erstrecken und Schlitze aufweisen, die die Strömungsbahnen bilden, wobei die Schlitzwände die zusätzlichen Reibungsflächen darstellen. Eine derartige Trennwand kann als Blechstanzteil, als Sinterteil oder als MIM-Teil (im Metallspritzguss) hergestellt werden, wobei sie beispielsweise leiterartig oder kammartig erscheint. Bevorzugt können die verbleibenden Stege zwischen den Schlitzen sich beidseitig eines mittleren Verbindungsstegs erstrecken.

Um jede notwendige Länge der Strömungsbahnen zu erreichen, können in dieser Ausführung mehrere derartige Trennwände dicht aneinander gereiht sein, wobei die Schlitze fluchten.

In einer weiteren Ausführung kann vorgesehen sein, dass das Paket einen über die Länge durchgehenden Hohlraum aufweist, der sich mittig in der Fließstrecke erstreckt. Diese Ausführung erlaubt es, durch das in der Fließstrecke angeordnete Paket ein Bauteil zu führen. Dieses Bauteil kann beispielsweise ein Seil oder eine Kolbenstange oder dergleichen sein, wenn ein die Flüssigkeit aus dem Behälter drückender Kolben nicht geschoben, sondern gezogen wird.

Besonders vorteilhaft ist die erfindungsgemäße Ausbildung zusätzlicher Reibflächen, wenn eine ein veränderbares Magnetfeld erzeugende Einrichtung vorgesehen ist, die in der Fließstrecke Polflächen aufweist, über die das Magnetfeld zur Steuerung der Strömungsgeschwindigkeit auf die magnetorheologische Flüssigkeit einwirkt, wobei die Reibungsflächen jeder Trennwand zu den Polflächen parallele zusätzliche Polflächen bilden.

Jede Trennwand reduziert zwar die Querschnittsfläche des Austrittskanals und damit das pro Zeiteinheit magnetisierbare Volumen der Flüssigkeit, bewirkt aber durch die verringerten Abstände zwischen je zwei Polflächen trotz gleich bleibenden Abmessungen einen höheren Druckunterschied. Bevorzugt werden daher mehrere Trennwände zu einem Paket zusammen gefasst und in den Austrittskanal eingesetzt. In diesem Paket sind die für die Stärke der Magnetisierung maßgeblichen Abstände zwischen den Polflächen so klein, dass die Höhe des Austrittskanales vergrößert werden kann, um den Durchflussquerschnitt der Engstelle an das zu magnetisierende Volumen der durchzudrückenden magnetorheologischen Flüssigkeit anzupassen. Gegebenenfalls kann bei einer Vielzahl von gering beabstandeten Polflächen die Engstelle sogar eine größere freie Querschnittsfläche aufweisen als der Behälter; die Engstelle bildet in diesem Fall sogar eine Erweiterung.

Besonders vorteilhaft und leicht herstellbar ist eine Ausführung, in der die Trennwände aus Transformatorenblech gestanzt und an den einander berührenden Flächen lackiert sind. Die Lackierung isoliert die einzelnen Bleche voneinander, sodass entstehende Wirbelströme sich nicht addieren können.

Um die Fließfähigkeit der magnetorheologischen Flüssigkeit mittels eines Magnetfeldes so beeinflussen zu können, dass der Strömungswiderstand der Engstelle sich ändert, sind verschiedene Kriterien zu erfüllen. Ein von einer Spule erzeugtes Magnetfeld muss in die magnetorheologische Flüssigkeit eingebracht werden, wofür Elemente und Teile der Vorrichtung, die für den direkten Weg der Feldlinien durch die magnetorheologische Flüssigkeit vorgesehen sind, besser magnetisch leitend sein sollten, als andere Elemente und Teile, die außerhalb des direkten Weges der Feldlinien sind. Eingebrachte zusätzliche Polflächen erhöhen hier die Konzentration des Magnetfeldes auf die mit dem Magnetfeld in Wechselwirkung tretenden Partikel in der magnetorheologischen Flüssigkeit. Zur Verbesserung der Wirkung sollten dabei in der Strömung Turbulenzen möglichst vermieden werden, zumindest nicht gefördert werden. Deshalb ist der Einbau von Trennwänden, die eine glatte, keine Turbulenzen fördernde Oberfläche aufweisen, zu bevorzugen. Insbesondere sind ebene Flächen geeignet. Hoch stehende Stege oder Kanten sind von Nachteil. Im Gegensatz hierzu sind reibungserhöhende Schichten von Vorteil.

Eine der Umhüllung der Fließstrecke außen zugeordnete Spule wird daher mit einem Kern aus einem magnetisch leitenden Werkstoff, wie Trafoblech, Ferritpulver, usw., der in weiterer Folge als Spulenkernmaterial bezeichnet wird, insbesondere einem Eisenkern versehen, der beispielsweise C-förmig ist. Die Fließstrecke wird durch den Spalt geführt, der zwischen den Polflächen des C-förmigen Kernes verbleibt. Die an den Polflächen anliegenden Wände der Umhüllung der Fließstrecke sind aus magnetisch gut leitendem Material, die Seitenwände hingegen aus einem zumindest schlechter leitenden Material als die magnetorheologische Flüssigkeit.

Die Erfindung ermöglicht in einfacher Weise, die Umhüllung der Fließstrecke mit einem zylindrischen Querschnitt zu versehen. In dieser Ausführungsform umfasst die Vorrichtung ein durchgehendes zylindrisches Rohr, in dem die Engstelle durch den Einbau der Trennwand, insbesondere aber natürlich durch den Einbau eines oben beschriebenen Paketes von Trennwänden gebildet ist, wobei dem Paket beidseitig als Abschluss je ein im Querschnitt kreissegmentförmiges Element aus Spulenkernmaterial zugeordnet ist, sodass das zylindrische Rohr ausgefüllt ist. Da die Spule mit den Polflächen des Eisenkerns außen anliegt, besteht das zylindrische Rohr insbesondere aus einem magnetisch nicht oder zumindest schlechter leitendem Material als die durch die Strömungsbahnen zu drückende magnetorheologische Flüssigkeit, um einen magnetischen Kurzschluss über die Rohrwand zu vermeiden. Auch das Paket selbst kann entsprechend dieser Forderung hinsichtlich der magnetischen Leitfähigkeit aufgebaut sein, indem beispielsweise sich parallel zu den Strömungsbahnen erstreckende Trennwände aus Spulenkernmaterial durch Stege aus zumindest schlechter magnetisch leitendem Material voneinander beabstandet sind.

Werden die Trennwände, wie oben beschrieben, aus dem Spulenkernmaterial gestanzt, so können die verbleibenden Stege nicht aus einem magnetisch schlechter leitenden Material bestehen; es hat sich aber gezeigt, dass die Stege bei entsprechender Minimierung so magnetisch gesättigt werden, dass das Magnetfeld dennoch ausreichend durch die Strömungsbahnen gezwungen wird. Alternativ können mit Vorteil Aussparungen in den Trennwänden vorgesehen sein, durch die hindurch Halterungen aus magnetisch schlecht oder nicht leitendem Werkstoff geführt sind, die die Trennwände voneinander beabstandet halten.

In der erfindungsgemäßen Ausführung, die eine sehr raumsparende Konstruktion darstellt, ist vorgesehen, dass die das veränderbare Magnetfeld erzeugende Einrichtung einen von einer Spule umwickelten Kern aufweist, der die in der Fließstrecke angeordnete Trennwand bildet, wobei die Spulenachse senkrecht zu den Strömungsbahnen liegt, und dass die Fließstrecke eine Umhüllung aus magnetisch leitendem Material aufweist. Vorzugsweise sind die Trennwände in zwei Paketen zusammen gefasst, die beiderseits des von der Spule umwickelten Kerns angeordnet sind. Der zwischen den beiden Paketen von Trennwänden angeordnete Kern ist bevorzugt als annähernd quaderförmiger Block ausgeführt, um den die Spulenwicklung gelegt ist, deren Achse sich senkrecht zur Strömungsrichtung durch die Fließstrecke erstreckt. Der Kern innerhalb der Spule kann ebenfalls Strömungsbahnen enthalten, wenn die Spule dreidimensional gewickelt ist und die Ein- und Austrittsöffnungen der Strömungsbahnen frei lässt.

Besonders bevorzugt ist eine Ausführung mit zwei dreidimensional gewickelten, symmetrisch innen liegenden Spulen, die jeweils als Kern ein kreissegmentförmiges Element aufweisen, das an der Innenseite des Rohres anliegt. Zwischen den beiden Kernen ist ein Paket von Trennwänden angeordnet, das, wie oben bereits erwähnt, einen durchgehenden Hohlraum aufweisen kann. Diese Ausführung ist insbesondere auch von Vorteil, wenn Behälter und Austrittskanal einteilig aus einem durchgehenden zylindrischen Rohr gefertigt sind. Wenn Spule und Kern eine mittige Trennwand bilden und beidseitig ein Paket von Trennwänden angeordnet ist, so werden beide Pakete wiederum durch ein im Querschnitt kreissegmentförmiges Element aus Spulenkernmaterial vervollständigt, deren gebogene Flächen an der Rohrinnenseite anliegen. Im Gegensatz zur vorstehend beschriebenen Ausführung mit einer außen angeordneten Spule ist in dieser Ausführung das Rohr aus Spulenkernmaterial, um den magnetischen Kreis ohne zusätzliche Elemente direkt zu schließen.

Ausgehend vom Kern der Spule etwa in der Mitte der Fließstrecke verlaufen die Feldlinien somit senkrecht nach außen durch die Strömungsbahn bzw. ein Paket von Trennwänden mit zusätzlichen Polflächen und ein kreissegmentförmiges Element in das zylindrische Rohr, aus dem sie diametral gegenüber durch das zweite kreissegmentförmige Element und die zweite Strömungsbahn bzw. ein zweites Paket von Trennwänden in den in der Mitte angeordneten umwickelten Kern zurückkehren.

Bei der erfindungsgemäßen Vorrichtung können die innen liegenden Teile (Spule, Trennwände, Kern) der Einrichtung zur Erzeugung des veränderbaren Magnetfelds in einem zylindrischen Rohr axial verfahren werden. Vorteilhaft werden dabei die innen liegenden Teile mittels einer Kolbenstange, durch deren Bohrung die Kabel für die Energieversorgung geführt werden können gezogen oder gedrückt, oder mittels Seil bewegt.

Nachstehend wird nun die Erfindung anhand der Figuren der beiliegenden Zeichnungen näher beschrieben, ohne darauf beschränkt zu sein. Es zeigen:
- Fig. 1: eine schematische Ansicht einer Schwingungsdämpfvorrichtung einer Hinterradschwinge eines Fahrrads,
- Fig. 2: einen Längsschnitt durch die Verbindungsleitung von Fig. 1,
- Fig. 3: einen Querschnitt durch die Fließstrecke von Fig. 2,
- Fig. 4: eine schematische Schrägansicht einer ersten Ausführung der erfindungsgemäßen Vorrichtung,
- Fig. 5: eine Stirnansicht einer ersten Ausführung der Vorrichtung nach Fig. 4 mit dem Verlauf der Feldlinien eines Magnetfeldes,
- Fig. 6a: eine teilgeschnittene Schrägansicht einer dritten Ausführung ohne tangentialen Kanten,
- Fig.6b: eine teilgeschnittene Schrägansicht einer dritten Ausführung mit tangentialen Kanten
- Fig. 7: eine Schrägansicht eines Paketes von Trennwänden einer ersten Ausführung,
- Fig. 8: eine Stirnansicht der Ausführung von Fig. 6,
- Fig. 9: eine zweite Ausführung einer Trennwand,
- Fig. 10: eine vergrößerte Seitenansicht eines Paketes von Trennwänden der zweiten Ausführung,
- Fig. 11: eine zweite Ausführung einer Magnetspule in Schrägansicht,
- Fig. 12: einen Querschnitt durch eine weitere Ausführung der Vorrichtung mit einer Magnetspule nach Fig. 11,
- Fig. 13: einen Teillängsschnitt durch eine vierte Ausführung der Vorrichtung,
- Fig. 14: und 15 zwei Schaltbilder für die Ansteuerung der erfindungsgemäßen Vorrichtung, und
- Fig. 16: eine perspektivische Ansicht eines Trennwandstapels mit einzelnen Trennwandspulen.

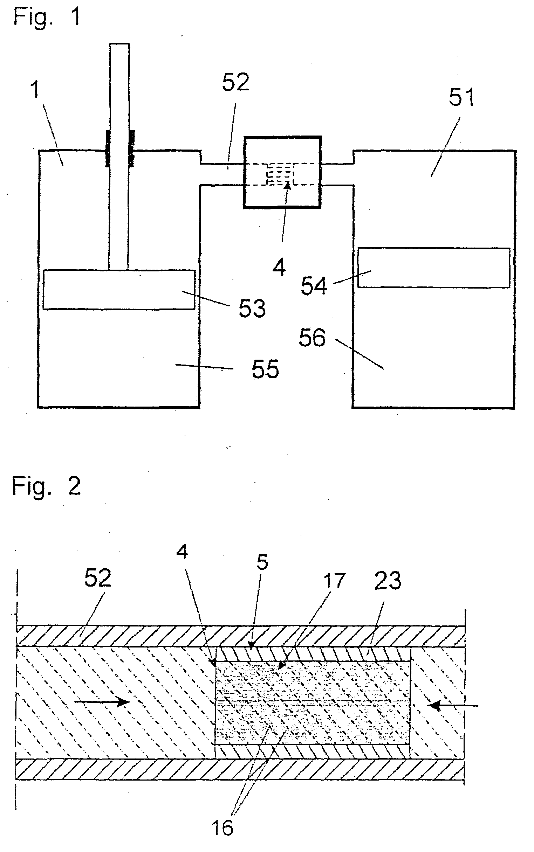

Eine Bewegung dämpfende Vorrichtung kann, wie Fig. 1 zeigt, beispielsweise an einer Hinterradschwinge eines Fahrrades vorgesehen sein, wobei ein Behälter 1 einen am Rahmen des Fahrrades mittels einer Kolbenstange fixierten Kolben 53 enthält. Oberhalb des Kolbens ist im Behälter 1 eine Flüssigkeit, beispielsweise magnetorheologische Flüssigkeiteingefüllt. Unterhalb des Kolbens 53 ist eine Feder oder eine als Feder wirkende Gasfüllung 55 angeordnet. An der Hinterradschwinge ist weiters ein Ausgleichsbehälter 51 fixiert, in den die Flüssigkeit aus dem Behälter 1 über die Verbindungsleitung 52 verdrängt werden kann. Der Ausgleichsbehälter enthält einen Kolben 54 und unterhalb des Kolbens 54 ebenfalls eine Feder oder eine als Feder wirkende Gasfüllung 56. In der Verbindungsleitung 52 ist eine Engstelle 4 vorgesehen, die eine Gegenkraft gegen die überströmende Flüssigkeit erzeugt, sodass eine Dämpfung erfolgt. Nicht dargestellt ist die Einheit zur Erzeugung eines variablen magnetischen Feldes.

In Fig. 2 ist die Leitung 52 im Längsschnitt gezeigt. Die Engstelle 4 wird durch ein in die Fließstrecke 5 eingefügtes Paket 17 von ebenen Trennwänden 15 gebildet, zwischen denen eine Vielzahl von Strömungsbahnen 16 verbleiben. Ist die Fließstrecke 5 von einem zylindrischen Rohr umhüllt, das einen Teil der Leitung 52 darstellt, so ist an das Paket 17 von Trennwänden 15 ein oberes und ein unteres kreissegmentförmiges Element 23 angesetzt, die an der Innenseite der Leitung 52 anliegen. Die ebenen Trennwände 15 weisen je zwei zusätzliche Reibungsflächen für die Flüssigkeit auf, die in der Fließstrecke einen sehr hohen Strömungswiderstand auf einer kleinen Länge bewirken.

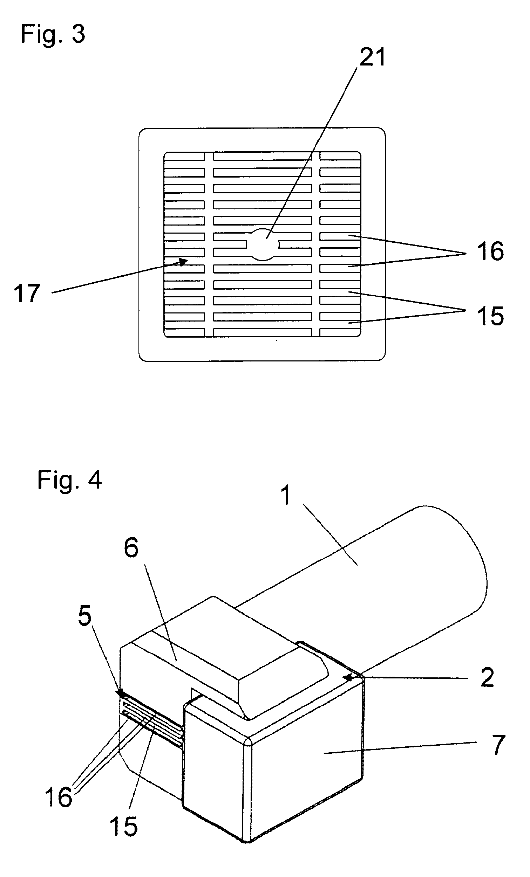

Aus Fig. 3 ist eine weitere Ausführung des Trennwandpaketes 17 ersichtlich. Hier sind die Trennwände 15 zusammenhängend in einem Kunststoff- oder Metallspritzgussteil vorgesehen, das als einstückiges Element in ein Rohr bzw. eine Leitung eingeschoben werden kann. Das Paket 17 weist einen mittleren Hohlraum 21 auf, durch den beispielsweise eine Leitung, ein Seil, eine Stange oder dergleichen geführt werden kann.

Wenn die Bewegungsdämpfung in ihrem Ablauf von irgendwelchen Kriterien abhängig gemacht werden soll, so kann eine magnetorheologische Flüssigkeit verwendet werden, die durch die Fließstrecke 5 gedrückt wird, und deren Fließeigenschaften durch eine Einrichtung 2 zur Erzeugung eines veränderbaren Magnetfeldes beeinflussbar sind. In diesem Fall sind die Trennwände bevorzugt aus einem magnetisch leitenden Material, sodass die Reibungsflächen auch Polflächen bilden, wenn eine Magnetspule 7 mit einem Kern 6 vorgesehen wird, und dessen Polflächen 11, 12 parallel zu den Reibungsflächen sind. Die Spule 7 ist dabei so angeordnet, dass ihre Achse senkrecht zu den Strömungsbahnen 16 zwischen den Trennwänden 15 liegt.

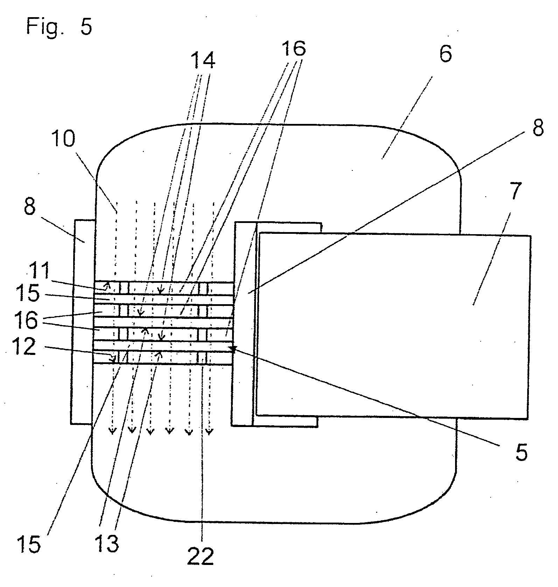

In Fig. 4 und 5 sind Details einer anderen Ausführung besser erkennbar. Ein Behälter 1 ist insbesondere zylindrisch und enthält einen verschiebbaren Kolben, mittels dem die magnetorheologische Flüssigkeit 3 durch die Fließstrecke ausgedrückt wird. Der anschließende Austrittskanal ist im Querschnitt etwa rechteckig und die Fließstrecke 4 ist durch Trennwände 15, die aus einem gut leitenden Spulenkernmaterial bestehen und von denen in Fig. 4 zwei gezeigt sind, in Strömungsbahnen 16 unterteilt, die bei gleicher Breite eine wesentlich verringerte Höhe aufweisen. Die das Magnetfeld erzeugende Einrichtung 2 dieser Ausführung weist eine Spule 7 auf, die mit einem C-förmigen Kern 6 aus einem magnetisch gut leitenden Spulenkernmaterial, beispielsweise aus Eisen versehen ist, und deren Achse senkrecht zur Strömungsrichtung der magnetorheologischen Flüssigkeit 3 in der Fließstrecke 5 bzw. den durch die Trennwände 15 gebildeten Strömungsbahnen 16 liegt. Der C-förmige Kern 6 kann auch aus Blechen, insbesondere Transformatorblechen zusammengesetzt sein.

Neben Eisen als günstigstes Material mit guten "magnetischen" Eigenschaften kommen weiters auch als Spulenkernmaterialien in Frage:
Silizium-Eisen, ein relativ günstiges Material mit guten magnetischen Eigenschaften, schlechter elektrischer Leitfähigkeit und geringster Remanenz, magnetischer Stahl, ein Material mit etwas höherem Preis, nicht korrodierend und mit etwas schlechteren magnetischen Eigenschaften,
Nickel-Eisen, eine klassische weichmagnetische Legierung mit höheren Preis und höchster Permeabilität, und
Eisen-Kobalt als teuerstes Material, aber mit höchster Sättigungsflussdichte.

Je nach Einsatzort sind andere Materialien möglich (z.B. Kern aus Ferrit, Eisenpulver oder anderen Pulvermischungen). Eventuell bieten "exotischere" Materialien Vorteile (z.B. BASF Catamold FN50: spritzgusstauglich).

Der C-förmige Kern 6 weist ebene, zueinander parallele Polflächen 11, 12 auf, zwischen denen der Austrittskanal hindurch geführt ist. Die magnetische Leitfähigkeit der magnetorheologischen Flüssigkeit 3 ist geringer als die des Kernes 6, sodass die Stärke des durch die Feldlinien 10 in Fig. 5 gezeigten Magnetfeldes von der Höhe des Spaltes zwischen den Polflächen 11, 12 abhängig ist. Jede Trennwand 15 verringert die Höhe und bildet zusätzliche ebene Polflächen 13, 14. Ist nur eine Trennwand 15 vorgesehen, so sind der oberen Strömungsbahn 16 die Polflächen 11 und 14, und der unteren Strömungsbahn 16 die Polflächen 13 und 12 zugeordnet. Jede dazwischen liegende, weitere Strömungsbahn 16 ist von Polflächen 13 und 14 zweier Trennwände 15 beeinflussbar. In der Ausführung nach Fig. 4 ist die Fließstrecke 5 in dem den Kern 6 passierenden Abschnitt des Austrittskanals mit drei Strömungsbahnen 16 versehen, die nahezu die gesamte Breite einnehmen. In der Ausführung nach Fig. 5 sind die Seitenwände 8 des Austrittskanals zumindest innerhalb der Fließstrecke 5 aus einem magnetisch zumindest schlecht leitenden Material, und die Trennwände 15 aus Spulenkernmaterial sind durch Stege 22 voneinander beabstandet, die ebenfalls aus einem magnetisch zumindest schlecht leitenden Material bestehen.

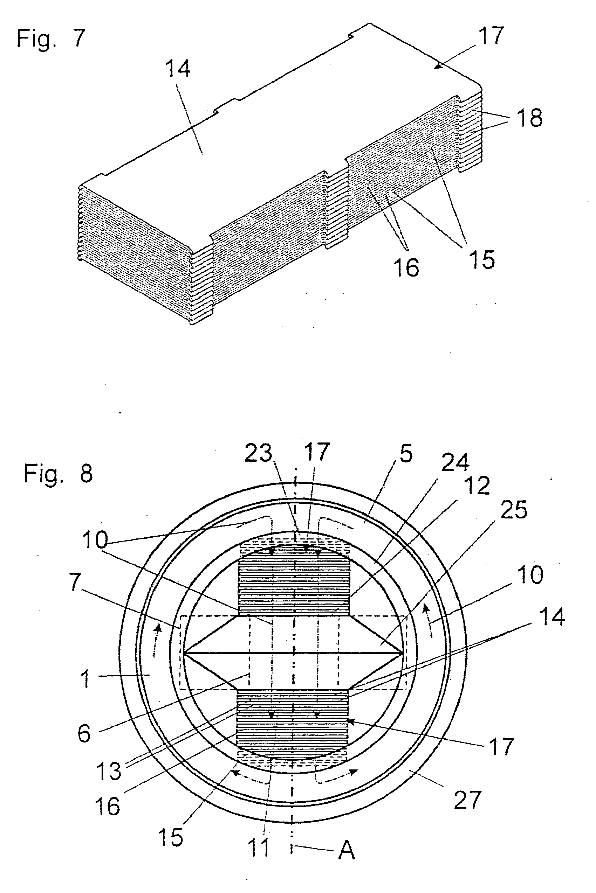

Fig. 7 zeigt Trennwände 15, die an den beiden Längsseitenrändern abgebogene Laschen 18 aufweisen, durch die die Trennwände 15 auf Abstand gehalten werden, und eine Vielzahl von Strömungsbahnen 16 begrenzen. Die Trennwände 15 sind über die Laschen 18 durch Kleben, Löten, od. dgl. zu einem Paket 17 verbunden, das als Einheit in den Austrittskanal eingeschoben werden kann. Die Trennwände 15 bestehen beispielsweise aus einem Transformatorenblech, also einem Material mit sehr hoher magnetischer Leitfähigkeit, und das in Fig. 7 gezeigte Paket 17 umfasst je sechzehn Trennwände 15 und Strömungsbahnen 16, die alle dieselbe Dicke bzw. Höhe von beispielsweise 0,2 mm aufweisen. Das Paket 17 hat somit eine Gesamtdicke von 6,4 (6,2) mm.

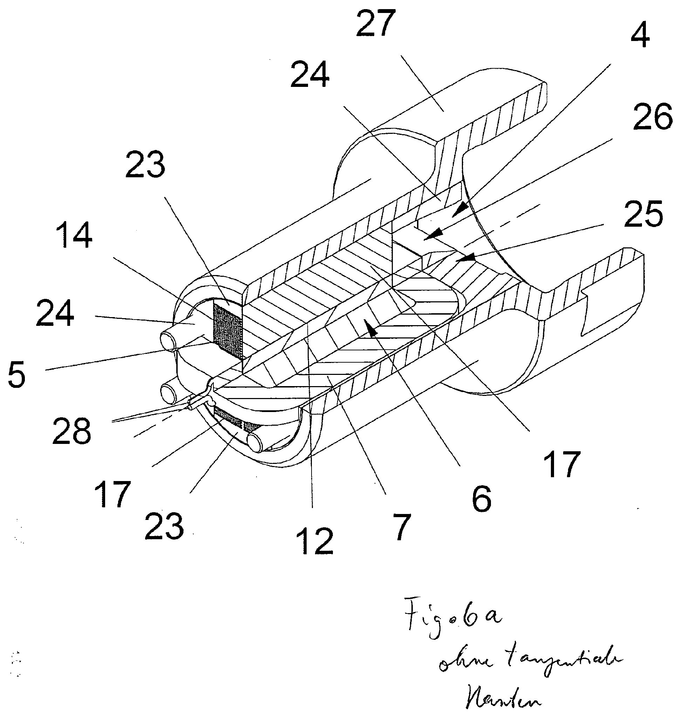

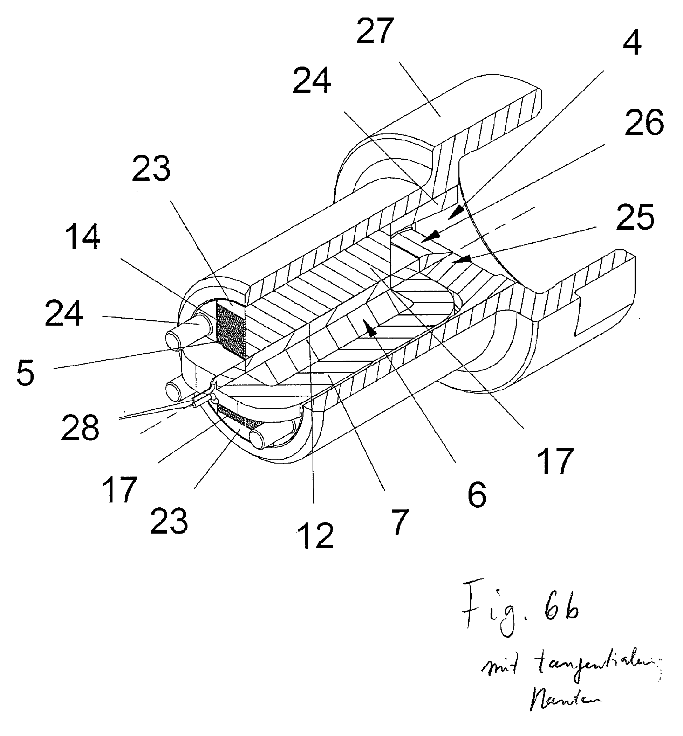

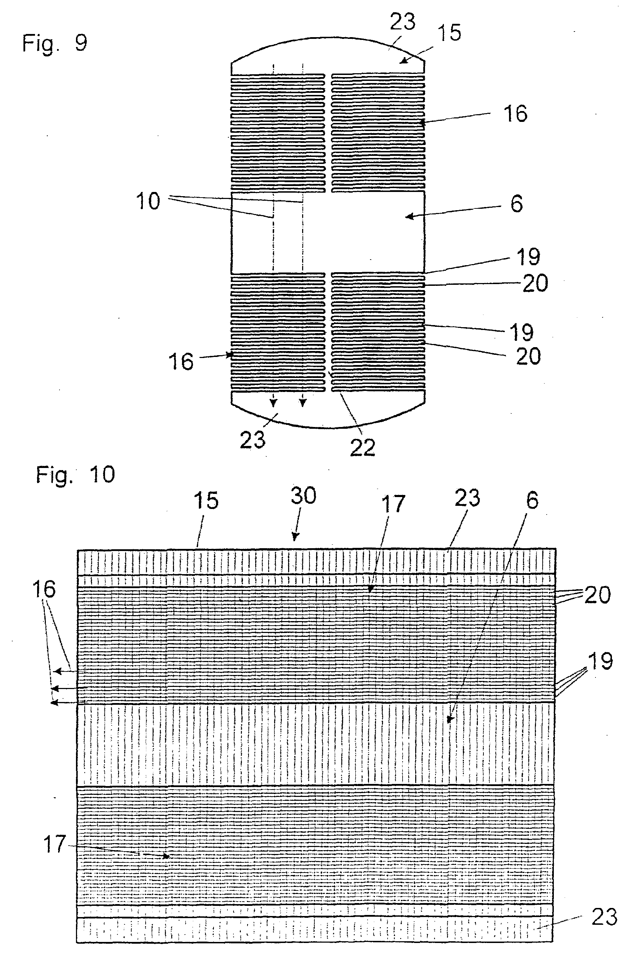

Die Fig. 6 und 8 bis 10 zeigen eine Ausführung, in der die Magnetspulenanordnung im Inneren der Fließstrecke 5 vorgesehen ist. Fig. 6 zeigt eine abgewinkelt geschnittene Schrägansicht des Austrittskanals, der als zylindrisches Rohrstück mit Gewindemuffe 27 dargestellt ist. In die Gewindemuffe 27 ist der Behälter 1 eingeschraubt, der ebenfalls durch ein Rohrstück gleichen Durchmessers gebildet ist. Die Engstelle 4 zu Beginn der Fließstrecke 5 ist durch einen keilförmigen Mittelsteg 25 eines Einsatzes 24 gebildet, sodass die aus dem Behälter 1 austretende magnetorheologische Flüssigkeit 3 in zwei Teilströme 26 unterteilt wird. Die Spulenanordnung 2 weist eine Magnetspule 7 auf, deren Achse senkrecht zur Fließstrecke 5 liegt und mittig im Austrittskanal so angeordnet ist, dass sie durch den keilförmigen Mittelsteg 25 abgedeckt ist (Fig. 8). Innerhalb der Spule 7 ist wiederum der Kern 6 angeordnet, der in dieser Ausführung quaderförmig ist und an den beidseitig ein Paket 17 von Trennwänden 15 mit einer Vielzahl von Strömungsbahnen 16 anschließt, wie dies in Fig. 7 oder nachfolgend zu Fig. 9 und 10 beschrieben ist. Als Kern kann ein Permanentmagnet bzw. eine Kombination aus Permanentmagneten und weichmagnetischen Materialien verwendet werden. Als Abschluss jedes Paketes 17 ist jeweils ein annähernd kreissegmentförmiges Element 23 (Polkappe) aufgesetzt, das aus Spulenkernmaterial gefertigt ist und an der Innenseite des zylindrischen Austrittskanals anliegt. Der Austrittskanal ist in dieser Ausführung ebenfalls aus einem Spulenkernmaterial hergestellt, beispielsweise aus einem Eisenrohr od. dgl., um die Magnetfeldlinien 10 zu schließen. Die elektrischen Anschlussleitungen 28 sind am austrittseitigen Ende aus dem Austrittskanal in nicht näher dargestellter Weise herausgeführt.

Wie bereits zu Fig. 7 erwähnt, kann das Paket 17 aus in Längsrichtung der Fließstrecke 5 sich erstreckenden Trennwänden 15 zusammengesetzt sein. Fig. 9 und 10 zeigen eine zweite Möglichkeit, ein Paket 17 von Trennwänden 15 mit Strömungsbahnen 16 auszugestalten. Jede Trennwand 15 erstreckt sich dabei in einer Radialebene senkrecht durch den Austrittskanal und die Strömungsbahnen 16 setzen sich aus Schlitzen 19 zusammen, die in die Trennwände 15 eingebracht sind. Eine derartige Trennwand 15 kann insbesondere aus einem Transformatorenblech od. dgl. gestanzt sein, wobei eine Vielzahl von Schlitzen 19 durch Stege 20 voneinander getrennt sind, die von einem mittleren Verbindungssteg 22 (Fig. 9) abstehen. Die Schlitze 19 erstrecken sich dadurch bis zum Rand hin und sind durch Seitenteile des Einsatzes 24 abgedeckt. Verbindungsstege 22 könnten natürlich auch an beiden Rändern vorgesehen sein, und die Schlitze 19 sich zwischen diesen ohne Mittelunterbrechung erstrecken. Wie Fig. 10 zeigt, werden mehrere Trennwände 15 direkt hintereinander angeordnet, wobei die Schlitze 19 fluchten. Die Schlitzwände stellen dabei die zusätzlichen Polflächen 13, 14 dar.

Denkbar ist auch die Ausbildung des Trennwandpakets als gefaltetes Element.

Die Fertigung durch Ausstanzen aus Transformatorenblech od. dgl. erlaubt es weiters, den Spulenkern 6, die beiden Pakete 17 von Trennwänden 15 und die kreissegmentförmigen Abschlusselemente 23 zur Anpassung an den zylindrischen Querschnitt des Austrittskanals 5 in einem Stück herzustellen, das dann die in Fig. 9 gezeigte Form aufweist. Die aneinanderliegenden Seitenflächen der Trennwände 15 können mit einem elektrisch isolierenden Lack versehen sein, sodass in den einzelnen Trennwänden 15 entstehende Wirbelströme sich nicht addieren. Der in Fig. 10 gezeigte Teil 30 wird mit der Spule 7 bestückt und in den Einsatz 24 eingelegt, der dann in den Austrittskanal oder die Leitung 52 eingebracht und axial fixiert wird. Der Einsatz 24 besteht aus einem magnetisch schlecht leitenden Material, beispielsweise einem Kunststoff.

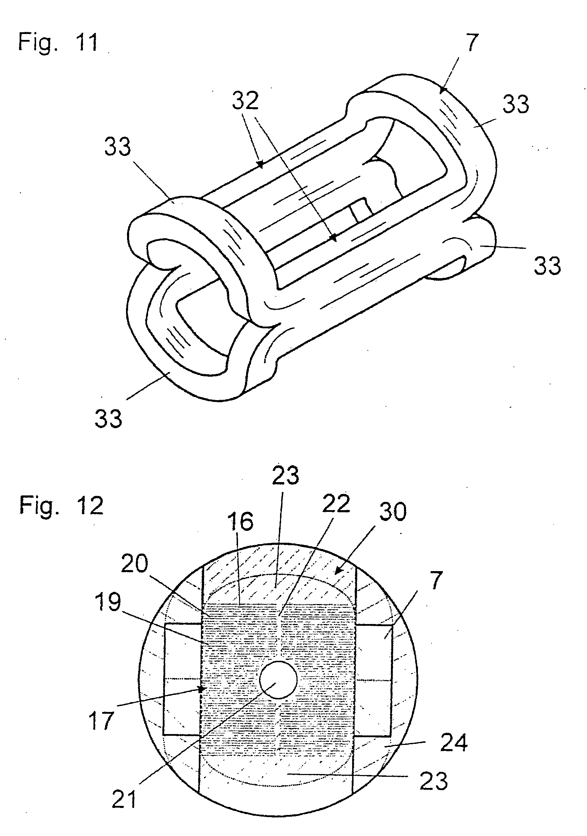

Die Fig. 11 und 12 zeigen zwei Ausführungen, in denen die Spule 7 dreidimensional gewickelt ist, d.h. jede Wicklung liegt nicht in einer Ebene, sondern ist aus mehreren Abschnitten zusammengesetzt, wobei zwischen den in Längsrichtung der Fließstrecke 5 sich im Austrittskanal erstreckenden geraden Abschnitten 32 je ein etwa halbkreisförmiger Abschnitt 33 nach oben oder unten geführt ist. Die Spule 7 ist dadurch an den Enden geöffnet, und ein Teil 30 gemäß Fig. 12, kann einen mittleren Hohlraum 21 aufweisen, durch den beispielsweise das oben erwähnte Zugmittel zum Kolben bzw. Boden des Behälters 1 geführt sein kann. Der Hohlraum 21 kann aber auch zur Aufnahme eines Verbindungselementes für das Paket 17 von Trennwänden 15 oder des in Fig. 1 gezeigten Seiles 34 dienen. Da die Spule 7 an den Enden aufgespreizt ist, kann auch der Kern 6 innerhalb der Spule 7 Strömungsbahnen 16 aufweisen, die zwischen fluchtenden Stegen 20 durch Schlitze 19 gebildet sind.

Die in Fig. 11 gezeigte Form kann sich auch aus zwei Spulen 7 ergeben, wie in Fig. 12 angedeutet ist. Jeder der beiden Spulen 7 ist in dieser Ausführung das kreissegmentförmige Element 23 als Kern zugeordnet, wobei zwischen den beiden Elementen 23 ein Paket 17 von Trennwänden 15 angeordnet ist, das Strömungsbahnen 16 und einen mittigen Hohlraum 21 aufweist. Der Einsatz 24 ist ringförmig und zum Behälter 1 hin abgeschrägt, wobei er die Engstelle 4 bildet (Fig. 6).

Die in der magnetorheologischen Flüssigkeit 3 bzw. in der Fließstrecke 5 angeordnete Einrichtung zur Erzeugung des veränderbaren Magnetfeldes kann auch eine Leiterplatte mit einer Planarspule und einem Kern umfassen, wobei auf der Leiterplatte auch noch weitere elektronische Bauteile für die Steuerung der Einrichtung 2 angeordnet sein können.

Die Spulen 7 können nicht nur aus einem isolierten Kupferdraht, sondern auch aus einem Kupferband, einer Kupferfolie oder einer eloxierten Aluminiumfolie gefertigt sein.

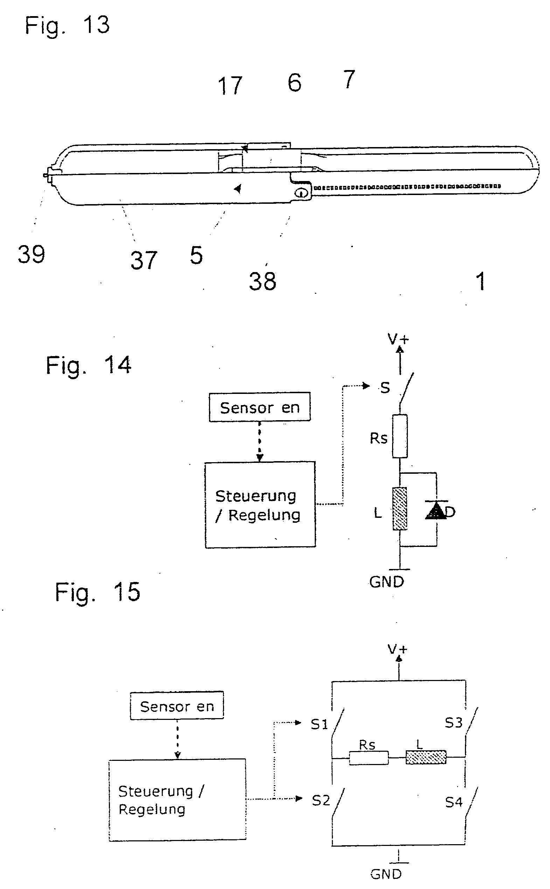

Fig. 13 zeigt eine Ausführung, in der an den Behälter 1, an dessen einem Ende die Fließstrecke verwirklicht ist, ein behälterartiger Verschluss 37 dichtend aufgesetzt ist, wobei der Behälter 1 und der Verschluss 37 unter Verringerung des Innenraumes ineinander geschoben werden können. Der Verschluss 37 ist mit einem Sensor 38 versehen, dem eine Längenmaßskala am Behälter 1 zugeordnet ist, sodass der Schiebeweg erfasst werden kann. Der Verschluss 37 ist weiters mit einem Drucksensor 39 versehen, sodass das Magnetfeld der innen liegenden Spule 7 innerhalb der Fließstrecke 5 druck- und/oder wegabhängig verändert werden kann. Diese Ausführung könnte beispielsweise in einer Sattelstütze eines Fahrrades zum Einsatz kommen.

Die Fig. 14 zeigt ein Beispiel einer einfachen, gepulsten Ansteuerung (PWM), bei der der Spulenstrom variiert werden kann. Der Schalter S kann in der einfachsten Ausführung ein mechanischer Schalter / Taster sein; vorteilhaft ist die Verwendung eines Transistors. Denkbar sind aber auch andere Möglichkeiten wie z.B. ein Relais oder auch Sonderformen des Transistors (MOSFET, IGBT). Der Schalter kann unter anderem auch im GND-Zweig, d.h. zwischen Spule und Masse (GND) vorgesehen sein. Der Widerstand Rs soll die Möglichkeit der Strommessung symbolisieren. Diese kann neben einer Messung über einen Shunt durch andere Methoden wie z.B. einen Stromtrafo oder eine integrierte Lösung (Strommess-IC, Hallsensor) erfolgen. Die Strommessung kann an einem beliebigen Ort der Schaltung erfolgen. Die Diode D ist eine Freilaufdiode, der es der Spule 7 erlaubt nach dem Öffnen von S weiter Strom zu treiben. Die Diode kann ebenfalls durch einen Schalter (Sync-FET) ersetzt werden.

Neben der einfachen Möglichkeit zur Steuerung kann die Steuerung mit verschiedenen Sensoren ausgestattet werden, die den Aufbau eines Regelkreises ermöglichen. Je nach Einsatzzweck können z.B. Druck-, Kraft-, Weg-, Temperatur-, Geschwindigkeits- oder Beschleunigungssensoren verwendet werden. Auch die Kombination dieser oder anderer Sensoren ist denkbar.

Fig. 15 zeigt ein Beispiel einer Ansteuerung mittels Vollbrücke (H-Brücke). Die Spule L kann so in beide Richtungen angesteuert werden, d.h. die Polarität an den Spulenanschlüssen kann gewechselt werden. Das ermöglicht z.B. einen Permanentmagneten im magnetischen Kreis der Spule zu verstärken oder abzuschwächen. Bei gepulster Ansteuerung (PWM) kann der Spulenstrom variiert werden. Der Widerstand Rs soll die Möglichkeit der Strommessung symbolisieren. Diese kann neben einer Messung über einen Shunt durch andere Methoden wie z.B. einen Stromtrafo oder eine integrierte Lösung (Strommess-IC, Hallsensor) erfolgen. Der Ort der Strommessung kann variieren, vorteilhaft ist z.B. die Messung im Ground (GND)-Zweig, um ein auf GND referenziertes Messignal zu erhalten. Unter anderem kann auch die doppelte Messung, z.B. vor S2 und vor S4, Vorteile bieten, da dadurch der Strom in jedem Halbbrückenzweig gemessen wird (Fehlererkennung). Neben der einfachen Möglichkeit zur Steuerung kann auch in dieser Ausführung die Steuerung mit verschiedenen Sensoren ausgestattet werden, die den Aufbau eines Regelkreises ermöglichen. Je nach Einsatzzweck können z.B. Druck-, Kraft-, Weg-, Temperatur-, Geschwindigkeits- oder Beschleunigungssensoren verwendet werden. Auch die Kombination dieser oder anderer Sensoren ist denkbar.

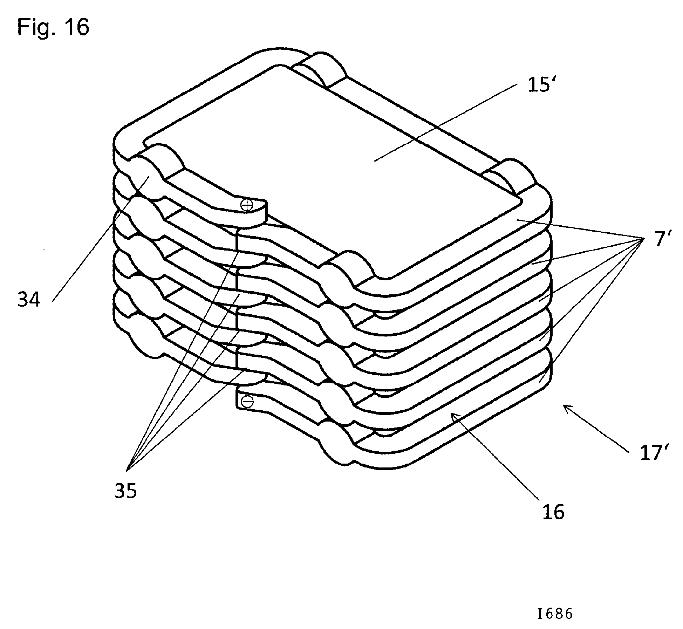

Die Fig. 16 zeigt ein Ausführungsbeispiels eines Trennwandstapels, bei dem die Fließstrecke durch mit Abstand voneinander angeordnete Trennwände 15' in mehrere Strömungsbahnen 16 unterteilt ist. Eine dieser Strömungsbahnen ist in Fig. 12 beispielhaft samt Angabe der Fließrichtung eingezeichnet.

Bei diesem Ausführungsbeispiel ist jeder Trennwand 15' aus magnetisch leitendem bzw. ferromagnetischem Material eine eigene Trennwand-Spule 7' zugeordnet, die jeweils aus nur einer einzigen Windung besteht. Diese Windung kann beispielsweise von einem isolierten Leiter gebildet sein.

Elektrisch sind die einzelnen Trennwandspulen in Serie geschaltet, wobei der Ausgang der jeweils darüber liegenden Trennwand-Spule 7' mit dem Eingang der darunter liegenden Trennwand-Spule 7' verbunden ist. Die Kontaktstellen sind mit 35 bezeichnet.

Diese Trennwand-Spulen 7' können alternativ oder zusätzlich zur Spule 7 der vorhergehenden Figuren vorhanden sein. Wenn sie nur alternativ zu dieser Spule vorhanden sind, dann bilden diese Trennwand-Spulen zusammen diese Spule 7.

Bevorzugt ist die Windung zumindest an der Einström- bzw. Ausströmseite maximal so hoch wie die Trennwand selbst, womit das Durchströmen nicht behindert wird. An den Seitenflächen kann die Spule höher sein. Hier können auch die Abstandhalter 34 (beispielsweise ausgebildet in der Isolierung der Trennwand-Spule 7') sowie die Kontakte 35 angeordnet sein. Die Windung der Spule kann auch aus einer eloxierten Aluminiumfolie bestehen. Es ist auch möglich, diese Windung auf einer Leiterplatte aufzubringen. Die Leiterplatten werden dann als Multi-Layer gestapelt.

Die Trennwände 15' sind vorzugsweise aus magnetisch leitendem, ferromagnetischen Material und bilden den Kern der einzelnen Trennwandspulen.

Der Kern (6), die Trennwände (15) und die Umhüllung können jeweils teilweise bzw. vollständig als Permanentmagnete ausgebildet sein. Dazu werden sie zumindest teilweise aus Materialien wie magnetischen Eisen- oder Stahllegierungen, Ferrit, AlNiCo, seltenen Erden wie SmCo und NeFeB gefertigt. Denkbar ist auch die Fertigung in Kombination mit anderen Materialien wie es zum Beispiel bei kunststoffgebundenen Magneten der Fall ist.

Wenn man diese Trennwand-Einzelspulen einsetzt, kann - wie bereits erwähnt - die Spule der vorhergehenden Ausführungsbeispiele mit der Bezugsziffer 7 entfallen. Damit erzielt man einen Gewichts- und Platzvorteil. Bei besonders starken Magnetfeldern kann man aber beide Spulen, nämlich die Spule 7 und die Trennwand-Spulen 7' einsetzen.

## Patentansprüche

1. Bewegung dämpfende Vorrichtung, in der eine magnetorheologische Flüssigkeit (3) zur Dämpfung einer Bewegung durch eine Engstelle (4) bildende Fließstrecke (5) gedrückt wird, wobei eine ein Magnetfeld erzeugende Einheit vorgesehen ist, deren Magnetfeld im Bereich der Fließstrecke über Polflächen auf die magnetorheologische Flüssigkeit einwirkt, wobei die Fließstrecke (5) durch zumindest eine zusätzliche Reibungsfläche (13, 14) bildende im Wesentlichen ebene Trennwand (15) in zumindest zwei im Wesentlichen eben ausgebildete Strömungsbahnen (16) unterteilt ist, **dadurch gekennzeichnet, dass** die das veränderbare Magnetfeld erzeugende Einrichtung (2) einen von einer Spule (7) umwickelten Kern (6) aufweist, der die in der Fließstrecke (5) angeordnete, aus einem ferromagnetischen Material bestehende Trennwand (15) bildet, wobei die Spulenachse senkrecht zu den Strömungsbahnen (16) liegt, und dass die Fließstrecke (5) eine Umhüllung aus magnetisch leitendem Material aufweist.

2. Ventil mit wenigstens einem Durchgangskanal, sowie mit einer Felderzeugungseinrichtung, wobei in dem Durchgangskanal ein durch ein Feld beeinflussbares Fluid vorgesehen ist, wobei der Durchgangskanal (5) durch zumindest eine zusätzliche Reibungsfläche (13, 14) bildende Trennwand (15) in zumindest zwei Strömungsbahnen (16) unterteilt ist , **dadurch gekennzeichnet, dass** die das veränderbare Magnetfeld erzeugende Einrichtung (2) einen von einer Spule (7) umwickelten Kern (6) aufweist, der in der Fließstrecke (5) angeordnet ist, aus einem ferromagnetischen Material bestehende Trennwand (15) bildet, wobei die Spulenachse senkrecht zu den Strömungsbahnen (16) liegt, und dass die Fließstrecke (5) eine Umhüllung aus magnetisch leitendem Material aufweist.

3. Vorrichtung nach Anspruch 1 oder 2, **dadurch gekennzeichnet, dass** die Trennwände parallel zueinander in mindestens einem Paket zusammengefasst sind.

4. Vorrichtung nach einem der vorhergehenden Ansprüche, **dadurch gekennzeichnet, dass** die Form aller Reibflächen annähernd gleich ist.

5. Vorrichtung nach einem der vorhergehenden Ansprüche, **dadurch gekennzeichnet, dass** die Magnetfeldstärke bzw. die Flussdichte in den verschiedenen Kanälen annähernd gleich ausgebildet ist.

6. Vorrichtung nach einem der vorhergehenden Ansprüche, **dadurch gekennzeichnet, dass** die zusätzlichen Reibungsflächen (13, 14) eben ausgebildet sind.

7. Vorrichtung nach einem der vorhergehenden Ansprüche, **dadurch gekennzeichnet, dass** sich die Trennwände (15) parallel zu den Strömungsbahnen (16) erstrecken und voneinander durch Distanzstücke, beispielsweise hochstehende Laschen (18) auf Abstand gehalten sind.

8. Vorrichtung nach einem der vorhergehenden Ansprüche, **dadurch gekennzeichnet, dass** sich die Trennwand (15) in einer Querschnittsebene der Fließstrecke (5) erstreckt und die Strömungsbahnen (16) bildende Schlitze (19) aufweist, wobei die Schlitzwände die zusätzlichen Reibungsflächen (13, 14) darstellen.

9. Vorrichtung nach einem der vorhergehenden Ansprüche, **dadurch gekennzeichnet, dass** die Fließstrecke (5) eine zylindrische Umhüllung aufweist, und die Polflächen (11, 12) an kreissegmentförmigen Elementen (23) vorgesehen sind, deren gewölbte Flächen an die Innenwand der Umhüllung angepasst sind.

10. Vorrichtung nach einem der vorhergehenden Ansprüche, **dadurch gekennzeichnet, dass** die Feldlinien (10) des Magnetfeldes im Wesentlichen senkrecht durch die Strömungsbahnen (16) verlaufen.

11. Vorrichtung nach einem der vorhergehenden Ansprüche, **dadurch gekennzeichnet, dass** die Trennwände (15) aus Transformatorenblech gestanzt und vorzugsweise zumindest an einander berührenden Flächen isoliert, insbesondere lackiert sind.

12. Vorrichtung nach einem der vorhergehenden Ansprüche, **dadurch gekennzeichnet, dass** der Kern (6) innerhalb der Spule (7) ebenfalls Strömungsbahnen (16) enthält, wobei die Wicklung der Spule (7) die Ein- und Austrittsöffnungen der Strömungsbahnen (16) frei lassen.

13. Vorrichtung nach einem der vorhergehenden Ansprüche, **dadurch gekennzeichnet, dass** der Kern (6), die Trennwand (15), die Polkappen (23) oder der Behälter (1) zumindest teilweise aus Materialien wie magnetischen Eisen- oder Stahllegierungen, Ferrit, AlNiCo, seltenen Erden wie SmCo und NeFeB gebildet ist.

14. Vorrichtung nach einem der vorhergehenden Ansprüche, **dadurch gekennzeichnet, dass** die Vorrichtung bei maximal angelegtem Magnetfeld den Durchtritt der magnetorheologischen Flüssigkeit durch die Strömungsbahnen (9) sperrt.

15. Verwendung einer Vorrichtung nach einem der Ansprüche 1 bis 14 für ein Zweirad mit Anordnung der Vorrichtung zwischen dem Rahmen und der Federgabel bzw. dem Hinterbau.

## Claims

1. Movement-damping apparatus in which a magnetorheological fluid (3) for damping a movement is forced through a flow passage (5) forming a constriction (4), wherein a unit generating a magnetic field is provided, the magnetic field of which in the region of the flow passage acts on the magnetorheological fluid through pole faces, wherein the flow passage (5) is subdivided into at least two essentially flat flow paths (16) by at least one essentially flat dividing wall (15) forming an additional friction surface (13, 14), **characterised in that** the device (2) generating the variable magnetic field has a core (6) which is wrapped in a coil (7) and forms the dividing wall (15) which is arranged in the flow passage (5) and is made of a ferromagnetic material, wherein the coil axis lies perpendicular to the flow paths (16), and **in that** the flow passage (5) has a sheath made of magnetically conductive material.

2. Valve with at least one through-channel, and with a field-generating device, wherein a fluid which can be influenced by a field is provided in the through-channel, wherein the through-channel (5) is sub-divided into at least two flow paths (16) by a dividing wall (15) forming at least one additional friction surface (13, 14), **characterised in that** the device (2) generating the variable magnetic field has a core (6) which is wrapped in a coil (7) and is arranged in the flow passage (5) and forms a dividing wall (15) which is made of a ferromagnetic material, wherein the coil axis lies perpendicular to the flow paths (16), and **in that** the flow passage (5) has a sheath made of magnetically conductive material.

3. Apparatus according to claim 1 or 2, **characterised in that** the dividing walls are combined parallel to one another in at least one package.

4. Apparatus according to one of the preceding claims, **characterised in that** the shape of all the friction surfaces is approximately the same.

5. Apparatus according to one of the preceding claims, **characterised in that** the magnetic field strength or the flux density is designed so as to be approximately the same in the different channels.

6. Apparatus according to one of the preceding claims, **characterised in that** the additional friction surfaces (13, 14) are designed so as to be flat.

7. Apparatus according to one of the preceding claims, **characterised in that** the dividing walls (15) extend parallel to the flow paths (16) and are kept apart from one another by spacers, for example standing strips (18).

8. Apparatus according to one of the preceding claims, **characterised in that** the dividing wall (15) extends in a cross-sectional plane of the flow passage (5) and has slots (19) forming the flow paths (16), wherein the slot walls constitute the additional friction surfaces (13, 14).

9. Apparatus according to one of the preceding claims, **characterised in that** the flow passage (5) has a cylindrical sheath, and the pole faces (11, 12) are provided on circle-segment shaped elements (23), the curved surfaces of which are matched to the internal wall of the sheath.

10. Apparatus according to one of the preceding claims, **characterised in that** the field lines (10) of the magnetic field run essentially perpendicularly through the flow paths (16).

11. Apparatus according to one of the preceding claims, **characterised in that** the dividing walls (15) are stamped from transformer sheet and preferably insulated, in particular varnished, at least at touching surfaces.

12. Apparatus according to one of the preceding claims, **characterised in that** the core (6) inside the coil (7) also comprises flow paths (16), wherein the winding of the coil (7) leaves the inlet and outlet openings of the flow paths (16) free.

13. Apparatus according to one of the preceding claims, **characterised in that** the core (6), the dividing wall (15), the pole caps (23) or the container (1) are at least partly made of materials such as magnetic iron or steel alloys, ferrite, AlNiCo, rare earths such as SmCo and NeFeB.

14. Apparatus according to one of the preceding claims, **characterised in that** the apparatus blocks the passage of the magnetorheological fluid through the flow paths (9) when the maximum magnetic field is applied.

15. Use of an apparatus according to one of claims 1 to 14 for a bicycle with the apparatus arranged between the frame and the spring fork or the rear structure.

## Revendications

1. Dispositif amortissant le mouvement, dans lequel un liquide magnéto-rhéologique (3), pour amortir un mouvement, est poussé à travers une voie d'écoulement (5) qui définit un goulot d'étranglement (4), étant précisé qu'il est prévu une unité génératrice d'un champ magnétique, dont le champ magnétique agit dans la zone de la voie d'écoulement, par l'intermédiaire de faces polaires, sur le liquide magnéto-rhéologique, étant précisé que la voie d'écoulement (5) est divisée par au moins une cloison (15) globalement plane, qui forme des surfaces de frottement supplémentaires (13, 14), en au moins deux trajets d'écoulement (16) de forme globalement plane,
**caractérisé en ce que** le dispositif (2) qui produit le champ magnétique variable comporte un noyau (6) autour duquel est enroulée une bobine (7) et qui forme la cloison (15) disposée sur la voie d'écoulement (5) et composée d'un matériau ferromagnétique, étant précisé que l'axe de bobine est perpendiculaire aux trajets d'écoulement (16), et **en ce que** la voie d'écoulement (5) présente une enveloppe en matériau à conduction magnétique.

2. Soupape avec au moins un conduit de passage et un dispositif générateur de champ, étant précisé qu'il est prévu dans le conduit de passage un fluide apte à être influencé par un champ, étant précisé que le conduit de passage (5) est divisé par au moins une cloison (15), qui forme des surfaces de frottement supplémentaires (13, 14), en au moins deux trajets d'écoulement (16),
**caractérisé en ce que** le dispositif (2) qui produit le champ magnétique variable comporte un noyau (6) autour duquel est enroulée une bobine (7) et qui forme la cloison (15) disposée sur la voie d'écoulement (5) et composée d'un matériau ferromagnétique, étant précisé que l'axe de bobine est perpendiculaire aux trajets d'écoulement (16), et **en ce que** la voie d'écoulement (5) présente une enveloppe en matériau à conduction magnétique.

3. Dispositif selon la revendication 1 ou 2, **caractérisé en ce que** les cloisons sont réunies, parallèlement les unes aux autres, en au moins un paquet.

4. Dispositif selon l'une des revendications précédentes, **caractérisé en ce que** la forme de toutes les surfaces de frottement est à peu près la même.

5. Dispositif selon l'une des revendications précédentes, **caractérisé en ce que** l'intensité de champ magnétique ou la densité de flux dans les différents conduits est étudiée pour être à peu près la même.

6. Dispositif selon l'une des revendications précédentes, **caractérisé en ce que** les surfaces de frottement supplémentaires (13, 14) ont une forme plane.

7. Dispositif selon l'une des revendications précédentes, **caractérisé en ce que** les cloisons (15) s'étendent parallèlement aux trajets d'écoulement (16) et sont maintenues écartées les unes des autres par des pièces d'écartement, par exemple des languettes verticales (18).

8. Dispositif selon l'une des revendications précédentes, **caractérisé en ce que** la cloison (16) s'étend dans un plan de section transversale de la voie d'écoulement (5) et présente des fentes (19) qui forment les trajets d'écoulement (16), étant précisé que les parois des fentes constituent les surfaces de frottement supplémentaires (13, 14).

9. Dispositif selon l'une des revendications précédentes, **caractérisé en ce que** la voie d'écoulement (5) présente une enveloppe cylindrique, et les surfaces polaires (11, 12) sont prévues sur des éléments (23) dont les surfaces bombées sont adaptées à la paroi intérieure de l'enveloppe.

10. Dispositif selon l'une des revendications précédentes, **caractérisé en ce que** les lignes de champ (10) du champ magnétique sont globalement perpendiculaires aux trajets d'écoulement (16).

11. Dispositif selon l'une des revendications précédentes, **caractérisé en ce que** les cloisons (15) sont découpées dans une tôle de transformateur et sont de préférence isolées, de préférence laquées, au moins sur des surfaces qui se touchent.

12. Dispositif selon l'une des revendications précédentes, **caractérisé en ce que** le noyau (6) à l'intérieur de la bobine (7) contient également des trajets d'écoulement (16), étant précisé que l'enroulement de la bobine (7) laisse dégagées les ouvertures d'entrée et de sortie des trajets d'écoulement (16).

13. Dispositif selon l'une des revendications précédentes, **caractérisé en ce que** le noyau (6), la cloison (15), les éléments formant couvercles (23) ou le récipient (1) sont formés au moins en partie à partir de matériaux tels que des alliages magnétiques de fer ou d'acier, de la ferrite, AlNiCo, des terres rares comme SmCo et NeFeB.

14. Dispositif selon l'une des revendications précédentes, **caractérisé en ce que** le dispositif, en présence d'un champ magnétique maximal appliqué, bloque le passage du fluide magnéto-rhéologique à travers les trajets d'écoulement (9).

15. Utilisation d'un dispositif selon l'une des revendications 1 à 14 pour un deux-roues avec une disposition du dispositif entre le cadre et la fourche à ressort ou la construction arrière.
